# EUROPEAN PATENT SPECIFICATION

(11) **EP 2 103 538 B1**
(45) Date of publication and mention of the grant of the patent: **04.01.2012**
(21) Application number: 09250771.4
(22) Date of filing: 19.03.2009
(51) Int. Cl.: B65D 19/42

(54) **Improvements in or relating to dolly-pallets**
Verbesserungen in oder im Zusammenhang mit Rollwagenpaletten
Améliorations de ou associées à des socles roulants et palettes

(30) Priority: 19.03.2008 GB 0805114
(43) Date of publication of application: 23.09.2009
(73) Proprietor: DS Smith Plastics Limited, Maidenhead Berkshire SL6 8XY (GB)
(72) Inventor: Maple, Peter, Chackmore Buckinghamshire MK18 5JE (GB); Whitehead, David, Yate Bristol BS37 7YW (GB); Carver, Andrew, Crook County Durham DL15 8LQ (GB)
(74) Representative: Marshall, Caroline

(56) References cited:
- EP-A- 1 772 390
- WO-A-2008/017798
- GB-A- 2 436 553

## Description

This invention relates to improvements in or relating to dolly-pallets for use in particular, but not exclusively, for the storage, transportation and retail of goods.

A conventional dolly includes a deck to receive goods and rotatable members, e.g. castors, secured to the deck to support the deck relative to a support surface, such as a substantially smooth floor in a store or warehouse. The rotatable members enable the dolly to move on the support surface which allows a user conveniently to move goods held by the dolly from one location to another. One or more of the rotatable members may swivel so as to improve the manoeuvrability of the dolly.

However, one problem with a conventional dolly is that it cannot be handled by automated conveying systems such as chain conveyors, power-driven roller conveys, or gravity-feed conveyors.

In particular the rotatable members foul against the rollers of the various conveyor systems which can deflect the dolly from its desired course and cause the dolly to become stuck on the conveyor.

This limits the usefulness of a dolly in a supply and distribution chain since it is necessary to transfer goods between a dolly and, e.g. a pallet, to permit automated conveying of the goods. Such transfers are time-consuming and labour intensive, and so introduce bottlenecks and inefficiencies into the supply and distribution chain.

An improved dolly, or so-called "dolly-pallet" includes one or more support members coupled with the deck and which, in use, bridge adjacent roller elements in a conveyor to support the deck relative to the conveyor. The or each support member is moveable relative to the deck between first and second positions, with the or each support member being closer to the deck in the first position.

WO 2008/017798 discloses such dolly-pallet. The WO 2008/017798 dolly-pallet is able to adopt a dolly-like configuration with the or each support member in the first position and the rotatable members being exposed beyond the support members, to allow the dolly-pallet to move on a floor in a store or warehouse. Such a dolly-pallet is also able to adopt a pallet-like configuration with the or each support member in the second position, further from the deck, so as to minimise or reduce completely the exposure of the rotatable members beyond the or each support member. In this way the aforementioned fouling of the rotatable members against the roller elements of the various conveyors is reduced.

Nevertheless, one or more of the rotatable members may still be, or become, exposed beyond the or each support member while the dolly-pallet is being transferred on a conveyor, and so deflection of the dolly-pallet from its desired course still occurs and the dolly-pallet can still become stuck on the conveyor.

Therefore there is a need for a dolly-pallet which permits a user to conveniently move goods from one location to another while also being handlable by an automated conveying system.

According to a first aspect of the invention there is provided a dolly-pallet comprising a deck including a plurality of rotatable members coupled therewith, the rotatable members including a first swivelable rotatable member coupled with the deck for swivelling movement about an orientation axis, the first swivelable rotatable member having a first support member located adjacent thereto, the first support member being moveable along a first path lying parallel to the orientation axis, the dolly pallet being characterised in that movement of the first support member along the said first path activates a lock to lock the first swivelable rotatable member in a desired orientation about its orientation axis.

The ability to lock the first swivelable rotatable member in a desired orientation about its orientation axis allows a user to configure the dolly-pallet so as to reduce the impact of the fouling of the rotatable members against the rollers of an automated conveying system, thereby reducing the extent to which the dolly-pallet is deflected from its desired course within the conveying system, and so reducing the likelihood of the dolly-pallet becoming stuck within the conveying system.

Moreover a user is able to utilise movement of the first support member to effect the aforementioned locking, thereby obviating the need for a secondary locking operation.

In a preferred embodiment of the invention the first support member is moveable between first and second positions along said first path, the first support member being closer to the deck in the first position. In this manner movement of the first support member is able to correspond to the dolly-pallet adopting a dolly-like configuration and a pallet-like configuration.

Conveniently movement of the first support member from the first position to the second position activates the lock. Such an arrangement allows a user to utilise transformation of the dolly-pallet into a pallet-like configuration to apply the lock, and so have the orientation of the first swivelable rotatable member become locked as the dolly-pallet adopts the said pallet-like configuration.

Preferably the plurality of rotatable members includes a first pair of rotatable members lying adjacent to a side of the deck defining, in use, a leading side of the dolly-pallet, the first pair of rotatable members including the first swivelable rotatable member and a first fixed rotatable member having a fixed orientation relative to the deck, the first fixed rotatable member having a second support member located adjacent thereto, the second support member being moveable together with the first support member.

Such a configuration provides the dolly-pallet with a desired degree of manoeuvrability on a support surface while minimising the extent to which a user must configure the dolly-pallet for use on an automated conveying system.

Optionally the desired orientation of the first swivelable rotatable member is such that the difference in the proximity of a portion of the first swivelable rotatable member exposed beyond the first support member and the proximity of a portion of the first fixed rotatable member exposed beyond the second support member to the, in use, leading side of the dolly-pallet is no greater than a predetermined limit. This helps to ensure that a leading exposed portion of the first swivelable rotatable member and a leading exposed portion of the first fixed rotatable member are sufficiently aligned with one another, relative to the intended direction of travel of the dolly-pallet, that the effect of one element leading the other, on the extent to which the dolly-pallet is skewed from its desired course, is minimal.

In a preferred embodiment of the invention the predetermined limit is:
(i) a desired percentage of the spacing between the first swivelable and first fixed rotatable members; or
(ii) a desired percentage of the diameter of one of the first swivelable or the first fixed rotatable members.

In another preferred embodiment of the invention the predetermined limit lies in the range 0 to 50mm.

The predetermined limit may lie in the range 0 to 20mm.

Optionally the predetermined limit is substantially zero. Such an arrangement ensures that a leading exposed portion of each of the first swivelable and fixed rotatable members lies the same distance from the leading side of the dolly-pallet. This helps to ensure that each leading exposed portion abuts a roller element of an automated conveying system at the same time, and thereby minimises the likelihood of the dolly-pallet skewing from its desired course.

Preferably the first swivelable rotatable member is offset from its orientation axis and the predetermined limit is equal to the greatest difference in the proximity of the exposed portion of the first fixed rotatable member to the, in use, leading side of the dolly-pallet and the proximity of the exposed portion of the first swivelable rotatable member to the leading side of the dolly-pallet while the first swivelable rotatable member trails the leading side of the dolly-pallet. This configuration provides the dolly-pallet with desirable manoeuvrability characteristics on a support surface while helping to ensure that a leading exposed portion of the first swivelable rotatable member and a leading exposed portion of the first fixed rotatable member are sufficiently aligned with one another, relative to the intended direction of travel of the dolly-pallet, that the impact of one portion leading the other, on the extent to which the dolly-pallet is skewed from its desired course, is minimal.

In a further preferred embodiment of the invention the first fixed rotatable member lies substantially parallel with the, in use, leading side of the dolly-pallet. Such an arrangement helps imbue the dolly-pallet with desirable transfer characteristics when used in an automated conveying system.

Conveniently the desired orientation of the first swivelable rotatable member is lying parallel with the first fixed rotatable member. Such a feature helps to reduce the extent to which a dolly-pallet is skewed from its desired course while enabling a user, readily, to check that the dolly-pallet is in the desired configuration.

Preferably the dolly-pallet includes first and second pairs of rotatable members, the second pair lying adjacent to a second side of the deck defining, in use, a trailing side of the dolly-pallet and including a second swivelable rotatable member and a second fixed rotatable member, the second swivelable rotatable member having the first support member located adjacent thereto and the second fixed rotatable member having the second support member located adjacent thereto, the second swivelable and fixed rotatable members being configurable relative to one another in the same manner as the first swivelable and fixed rotatable members.

Such an arrangement has desirable manoeuvrability characteristics on a support surface and is readily configurable by a user for use in an automated conveying system.

The lock may include a lock member corresponding to at least the first swivelable rotatable member, the or each lock member being selectively engagable with the corresponding swivelable rotatable member to lock the orientation of the swivelable rotatable member about its orientation axis. The inclusion of one or more lock members which is engagable with a corresponding swivelable rotatable member ensures positive and robust locking of the orientation of the given swivelable rotatable member.

The or each lock member may be further engagable with the corresponding swivelable rotatable member to inhibit rotation of the swivelable rotatable member. Such a feature helps to inhibit movement of the dolly-pallet on a support surface, as desired, and reduces further the likelihood of the dolly-pallet becoming skewed while travelling through an automated conveying system.

In another preferred embodiment of the invention at least one support member includes a brake member engagable with at least one roller element of a conveyor while the corresponding support member is in the second position to inhibit lateral movement of the dolly-pallet relative to the or each roller element.

Such a feature helps to ensure that the dolly-pallet does not drift from its desired path along a conveyor. In addition the or each brake member may also be engagable with a support surface while the support member is in the second position, and so may further help to inhibit movement of the dolly-pallet relative to the support surface.

Optionally the or each brake member includes a biasing element to urge the brake member away from the corresponding support member. The inclusion of a biasing element helps to ensure a desired degree of engagement between the given brake member and a corresponding roller and/or support surface.

According to a second aspect of the invention there is provided a method of configuring a dolly-pallet for use, the dolly-pallet comprising a deck including a plurality of rotatable members coupled therewith, the rotatable members including a first swivelable rotatable member coupled with the deck for swivelling movement about an orientation axis, the first swivelable rotatable member having a first support member located adjacent thereto, the first support member being moveable along a first path lying parallel to the orientation axis, the method comprising the characterising steps of:
(a) orientating the first swivelable rotatable member relative to the deck about its orientation axis as desired; and
(b) moving the first support member along the said first path to activate a lock to lock the first swivelable rotatable member in the desired orientation about its orientation axis.

Locking at least one swivelable rotatable member in the said desired orientation about its orientation axis reduces the impact of any fouling of the swivelable rotatable member against, e.g. the rollers of an automated conveying system, thereby reducing the extent to which the dolly-pallet is deflected from its desired course along the conveying system, and so reducing the likelihood of the dolly-pallet becoming stuck within the conveying system.

Moreover such locking is achieved by utilising movement of the support member, and so does away with the need for a secondary locking operation.

In a preferred embodiment of the invention orientating the first swivelable rotatable member includes aligning the first swivelable rotatable member relative to a first fixed rotatable member. Such a step provides a user with a datum, i.e. the first fixed rotatable member, to assist in desirably orientating the first swivelable rotatable member.

Optionally aligning the first swivelable rotatable member relative to the first fixed rotatable member includes arranging the first swivelable rotatable member so that it lies parallel with the first fixed rotatable member. A user is able readily to monitor whether such alignment is correct.

In a further preferred embodiment of the invention arranging the first swivelable rotatable member so that it lies parallel with the first fixed rotatable member includes one of:
(c) moving the dolly-pallet on a support surface in the direction of rotation of the first fixed rotatable member; and
(d) orientating the dolly-pallet such that the first swivelable rotatable member lies substantially above or below the first fixed rotatable member.

A user is readily able to carry out either such step within a busy supply and distribution chain.

There now follows a brief description of preferred embodiments of the invention, by way of non-limiting example, with reference being made to the accompanying drawings, in which:
Figure 1 shows a perspective view from below of a dolly-pallet according to a first embodiment of the invention;
Figure 2 shows a plan view from below of the dolly-pallet shown in Figure 1;
Figure 3 shows a schematic view of swivelable and fixed rotatable members in the dolly-pallet shown in Figure 1 in a first configuration;
Figure 4 shows a schematic view of the swivelable and fixed rotatable members shown in Figure 3 in a second configuration;
Figure 5 shows a schematic view of the swivelable and fixed rotatable members shown in Figure 3 in a third configuration;
Figure 6 shows a schematic view of the swivelable and fixed rotatable members shown in Figure 3 in a fourth configuration;
Figure 7 shows a schematic view of the swivelable and fixed rotatable members shown in Figure 3 in a fifth configuration;

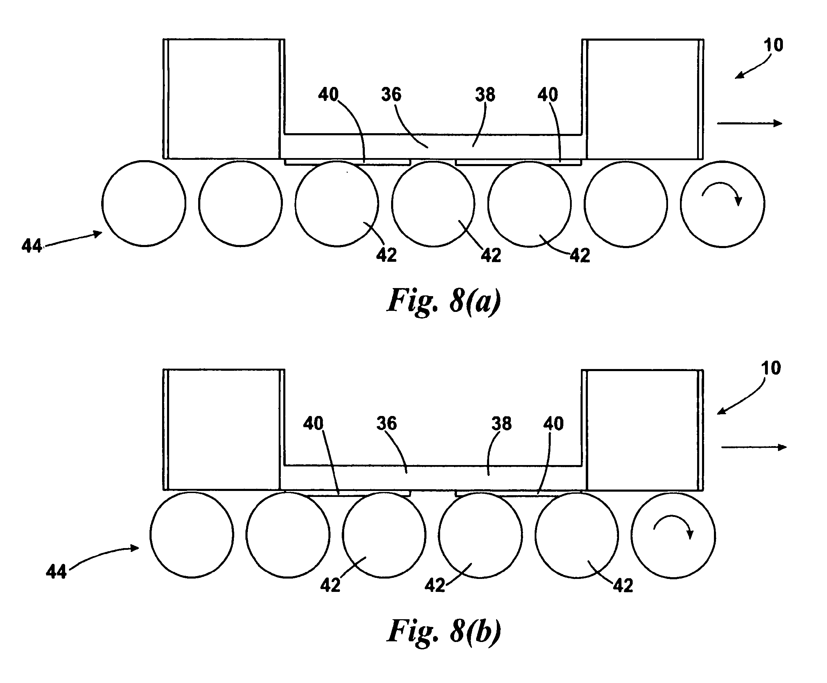

Figures 8(a) and 8(b) show a partial schematic view (rotatable members omitted for clarity) from one side of the dolly-pallet shown in Figure 1 in first and second positions, respectively, in an automated conveying system; and
Figure 9 shows a schematic view of a rotatable member.

A dolly-pallet according to a preferred embodiment of the invention is designated generally by the reference numeral 10.

The dolly-pallet 10 includes a deck 12 which has a plurality of rotatable members 14 coupled therewith.

The rotatable members 14 include a first pair 16 of rotatable members 14 which lie adjacent to a first side 18 of the deck 12. In use this first side 18 of the deck 12 defines a leading side 20 of the dolly-pallet 10, i.e. a side of the dolly-pallet 10 that faces the intended direction of travel of the dolly-pallet 10.

The first pair 16 of rotatable members 14 includes a first swivelable rotatable member 22a which is coupled with the deck for swivelling movement about an orientation axis OA. In the embodiment shown the orientation axis OA protrudes substantially perpendicularly to the deck 12.

The first pair 16 also includes a first fixed rotatable member 24a that is permanently fixed relative to its orientation axis OA, i.e. the first fixed rotatable member 24 is completely unable to swivel about its orientation axis OA and so its orientation relative to the deck 12 is fixed.

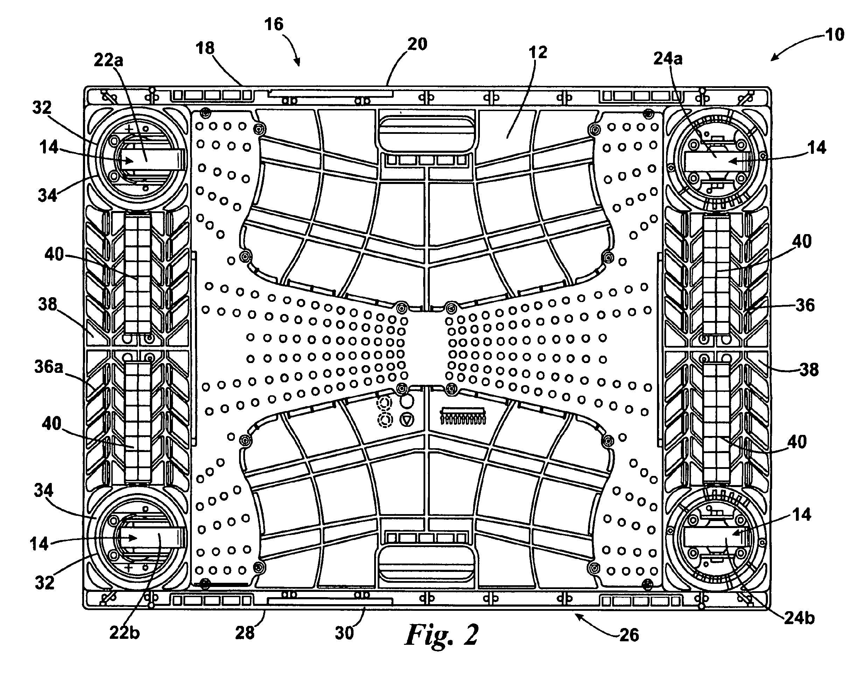

In the embodiment shown the first swivelable rotatable member 22a is offset from its orientation axis OA, as shown in Figure 2. Preferably the amount of this offset is 17mm, although in other embodiments of the invention (not shown) this amount may vary. In still further embodiments of the invention (also not shown) the swivelable rotatable member may not be offset from its orientation axis OA.

In the embodiment shown, in addition to the above, the first fixed rotatable member 24a is orientated about its orientation axis OA so as to lie substantially parallel with the leading side 20 of the dolly-pallet 10.

The dolly-pallet 10 shown in the figures includes first and second pairs 16, 26 of rotatable members 14.

The second pair 26 lies adjacent to a second side 28 of the deck which, in use, defines a trailing side 30 of the dolly-pallet 10. The second pair 26 includes a second swivelable rotatable member 22b and a second fixed rotatable member 24b. In the embodiment shown the swivelable rotatable members 22a, 22b and the fixed rotatable members 24a, 24b of each pair 16, 26 lie along the same side of the dolly-pallet 10, respectively. In other embodiments (not shown) the relative arrangement of the pairs 16, 26 of rotatable members 14 may differ to the aforementioned configuration.

The dolly-pallet 10 also includes a lock member 32 corresponding to each swivelable rotatable member 22a, 22b. Other embodiments of the invention may include only one lock member 32, and/or at least one additional lock member 32 corresponding to a fixed rotatable member 24a, 24b.

In the dolly-pallet 10 shown each lock member 32 includes a lock ring 34 which extends completely around an arc transcribed by the corresponding swivelable rotatable member 22a, 22b. In other embodiments the lock member 32 may include a lock element (not shown) which extends only partially around the said arc.

The dolly-pallet 10 also includes first and second support members 36a, 36b. The first support member 36a extends between the first and second swivelable rotatable members 22a, 22b, and the second support member 36b extends between the first and second fixed rotatable members 24a, 24b. In other embodiments of the invention (not shown) the support members 36a, 36b may extend between different rotatable members 14.

Each of the support members 36a, 36b defines a support skid 38.

Each support member 36a, 36b is moveable along a first path p₁ which lies parallel to the orientation axis OA of the first swivelable rotatable member 22a. In other words, each support member 36a, 36b is moveable substantially perpendicularly relative to the deck 12 so as, in use, to move substantially vertically.

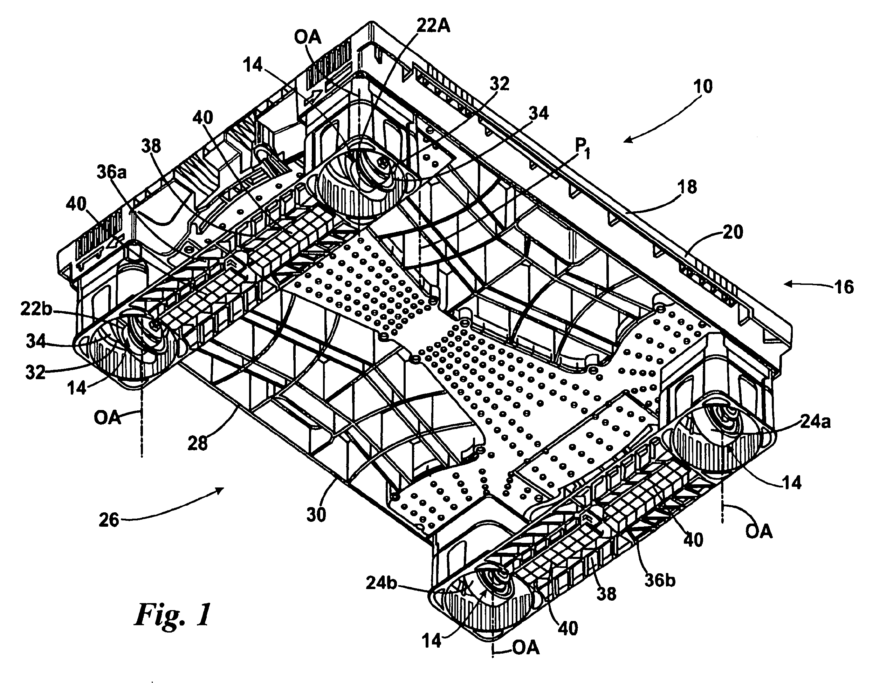

In the embodiment shown each support member 36a, 36b is moveable between a first position (not shown) in which the dolly-pallet adopts a dolly-like configuration, and a second position in which the dolly-pallet adopts a pallet-like configuration (as shown in Figures 1 and 2), with the respective support member 36a, 36b being closer to the deck 12 in the first position.

In particular, in the embodiment shown, in the first position the first and second swivelable rotatable members 22a, 22b are exposed beyond the first support member 36a (and the first and second fixed rotatable members 24a, 24b are exposed beyond the second support member 36b) to a first extent, and in the second position the first and second swivelable rotatable members 22a, 22b are exposed beyond the first support member 36a (and the first and second fixed rotatable members 24a, 24b are exposed beyond the second support member 36b) to a second extent, with the second extent being less than the first extent.

In other embodiments (not shown) the dolly-pallet may include a biasing means to urge one or more support members towards the second position. As such the rotatable members 14 may only normally be exposed beyond the or each support member while the or each support member is in the first position, i.e. while the dolly-pallet is in a dolly-like configuration, and the respective support member may ostensibly shield the rotatable members while the or each support member is in the second position, i.e. while the dolly-pallet is in the pallet-like configuration. However, movement of the or each support member against the biasing means causes one or more rotatable members to become (temporarily) exposed beyond the respective support member.

Each support member 36a, 36b also includes a pair of brake members 40. Other embodiments of the invention may include a single brake member or, 3 or more, brake members.

The brake members 40 are engagable with, e.g. at least one roller 42 of an automatic conveying system 44 while the support members 36a, 36b are in the second position to inhibit lateral movement of the dolly-pallet 10 relative to the or each roller 42.

In addition, the brake members 40 in the dolly-pallet 10 shown are colour-coded to provide desirable feedback to a user during operation of the dolly-pallet 10.

Optionally one or more of the brake members 40 may include a biasing element (not shown) to urge the brake member 40 away from the corresponding support member 36a, 36b.

In use, movement of the first support member 36a from the first position to the second position moves each lock member 32 into engagement with the corresponding swivelable rotatable member 22a, 22b to lock the orientation of the swivelable rotatable member 22a, 22b in a desired orientation about their respective orientation axes OA.

Movement of the first support member 36a from the second position to the first position moves each lock member 32 out of engagement with the corresponding swivelable rotatable member 22a, 22b so as to unlock the swivelable rotatable member 22a, 22b.

In other embodiments of the invention this operation may be reversed.

The aforementioned locking is effected by a respective lock ring 34 moving into engagement with a corresponding swivelable rotatable member 22a, 22b so as to inhibit swivelling of the rotatable member 14 about its orientation axis OA. Such engagement also inhibits rotation of each swivelable rotatable member 22a, 22b about a respective rotational axis RA.

The use of such an arrangement ensures that the first support member 36a is able to move into the second position (and apply the lock) regardless of the orientation of each swivelable rotatable member 22a, 22b.

A user orientates each swivelable rotatable member 22a, 22b about its orientation axis OA, as desired, before activating the lock, i.e. engaging the lock members 32.

The swivelable rotatable members 22a, 22b may be orientated relative to the corresponding fixed rotatable member 24a, 24b of the same pair 16, 26.

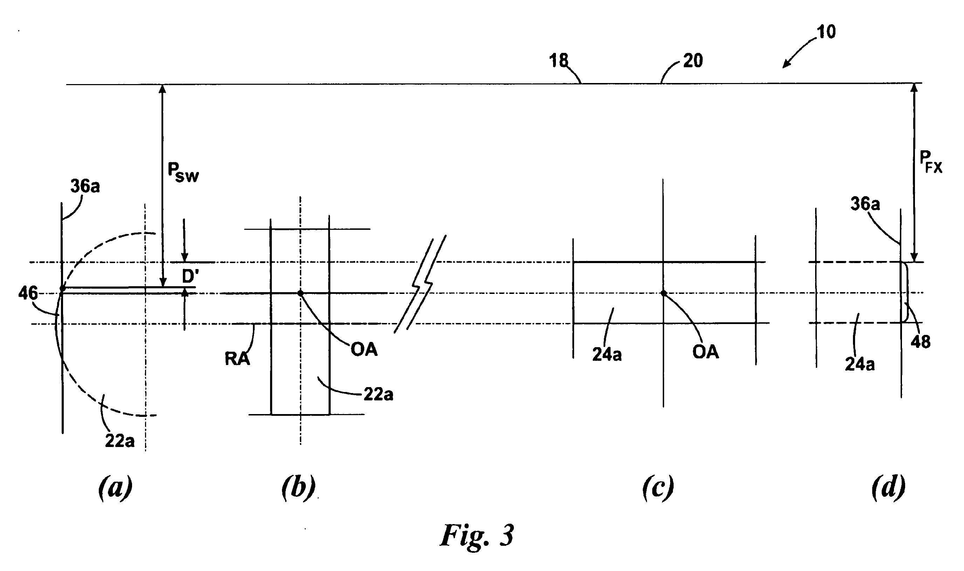

In particular, the first swivelable rotatable member 22a may be orientated about its respective orientation axis OA such that the difference D in the proximity P_{sw} of an exposed portion 46 of the first swivelable rotatable member 22a, i.e. a portion of the first swivelable rotatable member 22a exposed beyond the first support member 36a (as shown in side view (a) of each of Figures 3 to 7), to the leading side 20 of the dolly-pallet 10 and the proximity P_{FX} of the an exposed portion 48 of the first fixed rotatable member 24a (as shown in side view (d) of each of Figures 3 to 7) to the leading side 20 is no greater than a predetermined limit.

This predetermined limit may be a desired percentage of the spacing between the first swivelable and fixed rotatable members 22a, 24a, or a desired percentage of the diameter of one of the first swivelable or the first fixed rotatable members 22a, 24a.

The predetermined limit may also lie within a range such as, for example, 0 to 50mm, or more preferably 0 to 20mm.

In the embodiment shown in the drawings, i.e. a dolly-pallet 10 in which each swivelable rotatable member 22a, 22b is offset from its orientation axis, a desirable predetermined limit is equal to the greatest difference D' in the proximity P_{FX} of the exposed portion 48 of the first fixed rotatable member 24a to the leading side 20 of the dolly-pallet 10 and the proximity P_{sw} of the exposed portion 46 of the first swivelable rotatable member 22a to the leading side 20 of the dolly-pallet 10 while the first swivelable rotatable member 22a trails the leading side 20 of the dolly-pallet 10.

This configuration (in which the greatest difference D' in the relative proximities of the exposed portions 46, 48 of the first fixed and swivelable rotatable members 22a, 24a arises when the first swivel able rotatable member 22a trails the leading side 20) is illustrated schematically in Figure 3.

The first swivelable rotatable member 22a trials the leading side 20 of the dolly-pallet 10 when the rotational axis RA of the first swivelable rotatable member 22a is spaced from the leading side 20 by a distance greater than or equal to the distance of the orientation axis OA of the first swivelable rotatable member 22a from the leading side 20.

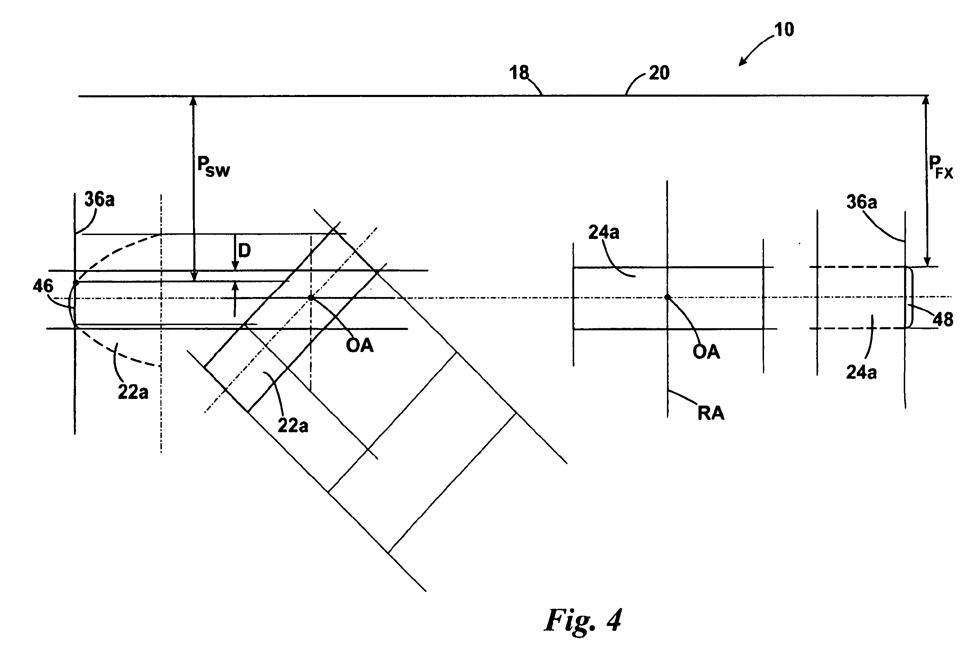

Figure 4 illustrates a further configuration in which the distance D between the proximity of each exposed portion 46, 48 to the leading side 20 lies within the aforementioned predetermined limit, and so provides the dolly-pallet 10 with acceptable handling characteristics on a conveyor.

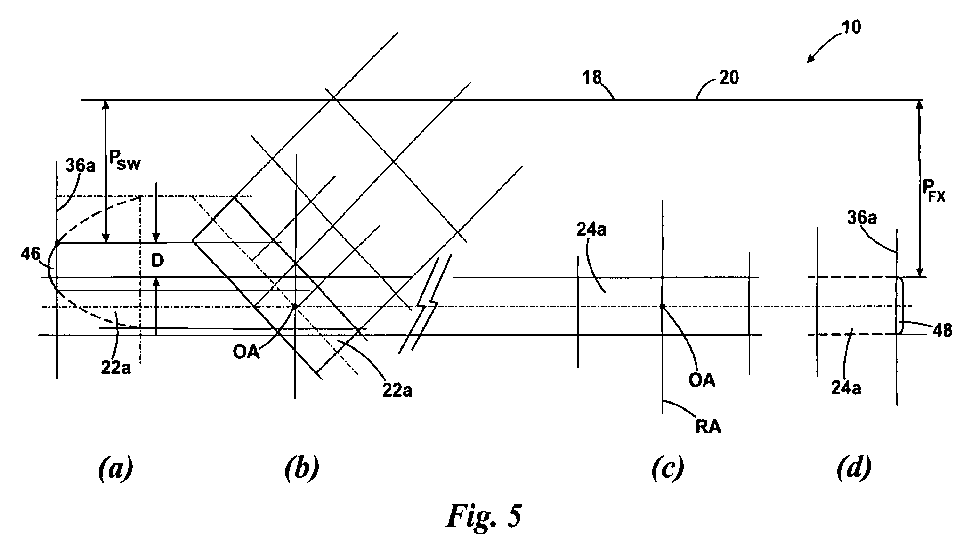

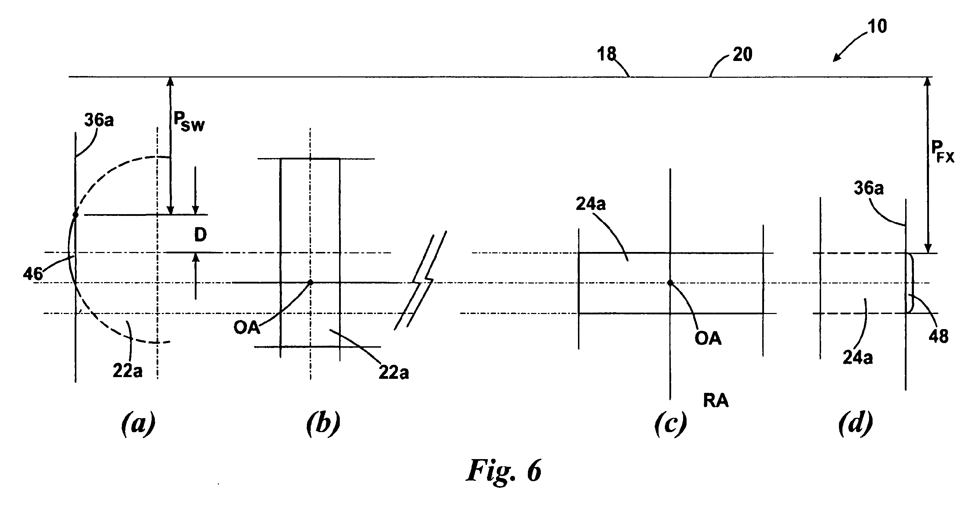

In contrast, Figures 5 and 6 illustrate schematically configurations in which the distance D lies at (Figure 5) or beyond (Figure 6) a desirable predetermined limit, i.e. the distance D is too large and the handling characteristics of the dolly-pallet 10 on a conveyor are poor.

In an especially preferred configuration the predetermined limit may be substantially zero, i.e. the first swivelable rotatable member 22a is orientated so that the exposed portion 46 of the first swivelable rotatable member 22a is the same distance from the leading side 20 of the dolly-pallet 10 as the exposed portion 48 of the first fixed rotatable member 24a. In other words the distance D is zero.

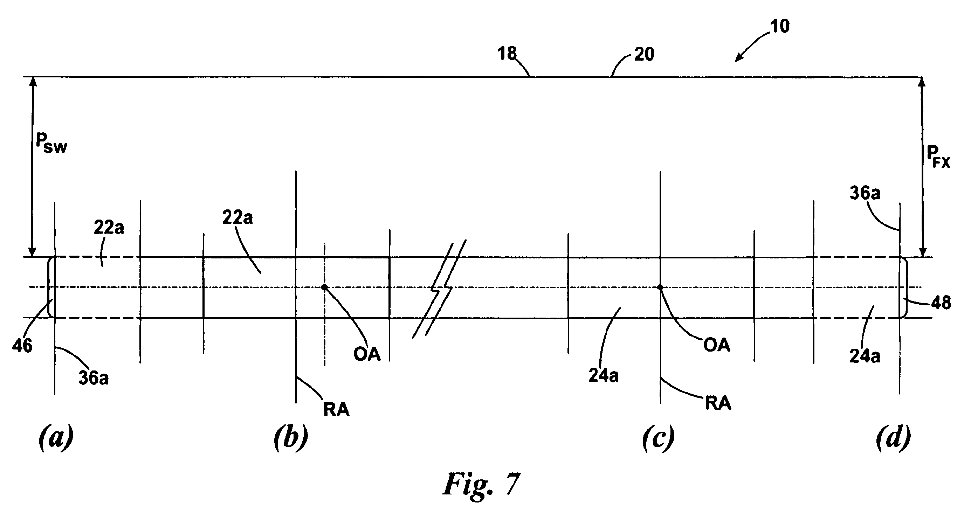

Such a parameter is met when the first swivelable rotatable member 22a is lying parallel with the first fixed rotatable member 24a, as illustrated schematically in Figure 7. Accordingly, the proximity P_{sw} of the exposed portion 46 of the first swivelable rotatable member 22a to the leading side 20 is equal to the proximity P_{FX} of the exposed portion 48 of the first fixed rotatable member 24a to the leading side 20.

A user may readily achieve the aforementioned configuration by moving the dolly-pallet 10 on a support surface in the direction of rotation of the first fixed rotatable member 24a, or by orientating the dolly-pallet 10 such that the first swivelable rotatable member 22a lies substantially above or below the first fixed rotatable member 24a so that gravity is able to act on the first swivelable rotatable member 22a to align it in parallel with the first fixed rotatable member 24a.

In the embodiment shown, i.e. a dolly-pallet 10 including a second pair 26 of swivelable and fixed rotatable members 22b, 24b, the second swivelable and fixed rotatable members 22b, 24b may be orientated relative to the leading side 20 of the dolly-pallet 10, and one another, in a similar manner to the first swivelable and fixed rotatable members 22a, 24a.

In addition to the above it may also be desirable to configure a wheel 50 within each rotatable member 14 to further optimise travel of the dolly-pallet 10 along a conveyor.

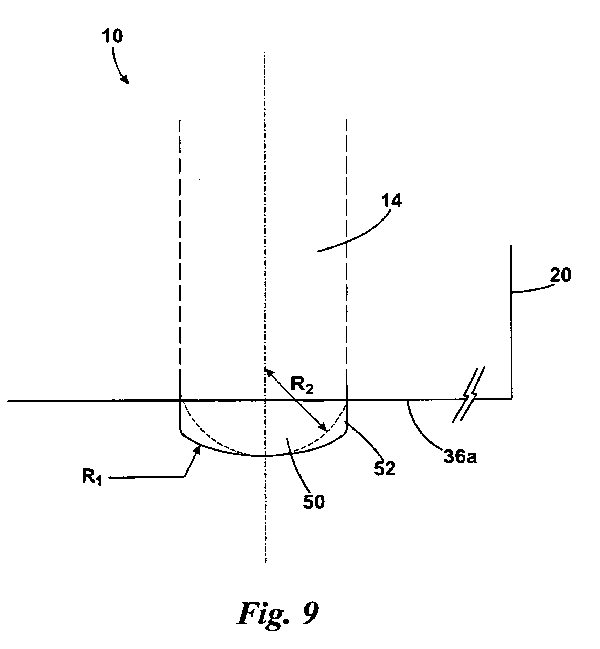

For example, a wheel 50 having a camber of first radius R₁ may create, in certain arrangements, a side wall 52 which protrudes beyond the corresponding support member 36a, 36b, as shown in Figure 9. A side wall 52 of this type is likely to engage abruptly with a roller 42 of a conveyor. Such abrupt engagement with a roller 42 has a tendency to skew the dolly-pallet from its intended direction of travel.

One option, therefore, is to reduce the radius of the camber to a second radius R₂ (as shown in dashed line at Figure 9). Modifying the wheel 50 in this manner removes the side wall and replaces it with a smoother, curved profile that is likely to engage less abruptly with a roller 42 of a conveyor. Such a smoother profile is less likely to skew the dolly-pallet from its intended direction of travel.

It should also be noted that the aforementioned embodiments of dolly-pallet 10 may be used in conjunction with a sleeve extending from an, in use, upper surface of the deck 12. Such a sleeve may be securable to the deck 12 or integrally formed with the deck 12, as required. In each case the sleeve may function to additionally secure any goods placed on the deck 12 relative to the dolly-pallet 10, and/or to define a hollow storage receptacle for receiving loose goods.

## Claims

1. A dolly-pallet (10) a deck (12) including a plurality of rotatable members (14) coupled therewith, the rotatable members (14) including a first swivelable rotatable member (22a) coupled with the deck (12) for swivelling movement about an orientation axis (OA), the first swivelable rotatable member (22a) having a first support member (36a), located adjacent thereto, the first support member (36a) being moveable along a first path lying parallel to the orientation axis (OA), the dolly pallet (10) being **characterised in that** movement of the first support member (36a) along the said first path activates a lock to lock the first swivelable rotatable member (22a) in a desired orientation about its orientation axis (OA).

2. A dolly-pallet (10) according to Claim 1 wherein the first support member (36a) is moveable between first and second positions along said first path, the first support member (36a) being closer to the deck (12) in the first position.

3. A dolly-pallet (10) according to Claim 2 wherein movement of the first support member (36a) from the first position to the second position activates the lock.

4. A dolly-pallet (10) according to any preceding claim wherein the plurality of rotatable members (14) includes a first pair (16) of rotatable members (14) lying adjacent to a side (18) of the deck (12) defining, in use, a leading side (20) of the dolly-pallet (10), the first pair (16) of rotatable members (14) including the first swivelable rotatable member (22a) and a first fixed rotatable member (24a) having a fixed orientation relative to the deck (12), the first fixed rotatable member (24a) having a second support member (36b) located adjacent thereto, the second support member (36b) being moveable together with the first support member (36a).

5. A dolly-pallet (10) according to Claim 4 wherein the desired orientation of the first swivelable rotatable member (22a) is such that the difference in the proximity of a portion of the first swivelable rotatable member (22a) exposed beyond the first support member (36a) and the proximity of a portion of the first fixed rotatable member (24a) exposed beyond the second support member (36b) to the, in use, leading side (20) of the dolly-pallet (10) is no greater than a predetermined limit.

6. A dolly-pallet (10) according to Claim 5 wherein the predetermined limit is:
(i) a desired percentage of the spacing between the first swivelable (22a) and first fixed (24a) rotatabte members; or
(ii) a desired percentage of the diameter of one of the first swivelable (22a) or the first fixe (24a) rotatable members.

7. A dolly-pallet (10) according to Claim 5 or Claim 6 wherein the predetermined limit lies in the range 0 to 50mm.

8. A dolly-pallet (10) according to Claim 7 wherein the predetermined limit lies in the range 0 to 20mm.

9. A dolly-pallet (10) according to Claim 8 wherein the predetermined limit is 9. A dolly-pallet according to Claim 8 wherein the predetermined limit is substantially zero.

10. A dolly-pallet (10) according to any of Claims 4 to 9 wherein the first swivelable rotatable member (22a) is offset from its orientation axis (OA) and the predetermined limit is equal to the greatest difference in the proximity of the exposed portion (48) of the first fixed rotatable member (24a) to the, in use, leading side (20) of the dolly-pallet (10) and the proximity of the exposed portion (46) of the first swivelable rotatable member (22a) to the leading side (20) of the dolly-pallet (10) while the first swivelable rotatable member (22a) trails the leading side (20) of the dolly-pallet (10).

11. A dolly-pallet (10) according to any of Claims 4 to 10 wherein the first fixed rotatable member (24a) lies substantially parallel with the, in use, leading side (20) of the dolly-pallet (10).

12. A dolly-pallet (10) according to Claim 11 wherein the desired orientation of the first swivelable rotatable (22a) member is lying parallel with the first fixed rotatable member (24a).

13. A dolly-pallet (10) according to any of Claims 4 to 12 including first (16) side second (26) pairs of rotatable members (14), the second pair (26) lying adjacent to a second side (28) of the deck (12) defining, in use a trailing side (30) of the dolly-pallet (10) and including a second swivelable rotatable member (22b) and a second fixed rotatable member (24b), the second swivelable rotatable member (22b) having the first support member (36a) located adjacent thereto and the second fixed rotatable member (24b) having the second support member (36b) located adjacent thereto, the second swivelable (22b) and fixed rotatable (24b) members being configurable relative to one another in the same manner as the first swivelable (22a) and fixed rotatable (24a) members.

14. A dolly-pallet (10) according to any preceding claim wherein the lock includes a lock members (32) corresponding to at least the first swivelable rotatable members (22a), the or each lock member (32) being selectively engagable with the corresponding swivelable rotatable member (22a, 22b) to lock the orientation of the swivelable rotatable member (22a, 22b) about its orientation axis (OA).

15. A dolly-pallet (10) according to Claim 14 wherein the or each lock member (32) is further engagable with the corresponding swivelable rotatable member (22a, 22b) to inhibit rotation of the swivelable rotatable member (22a, 22b).

16. A dolly-pallet (10) according to any preceding claim dependent on Claim 2 wherein at least one support member (36a, 36b) includes a brake member (40) engagable with at least one roller element (42) of a conveyor (44) while the corresponding support member (36a, 36b) is in the second position to inhibit lateral movement of the dolly-pallet (10) relative to the or each roller element (42).

17. A dolly-pallet (10) according to Claim 16 wherein the or each brake member (40) includes a biasing element to urge the brake member (40) away from the corresponding support member (36a, 36b).

18. A method of configuring a dolly-pallet (10) for use, the dolly-pallet (10) comprising a deck (12) including a plurality of rotatable members (14) coupled therewith, the rotatable members (14) including a first swivelable rotatable member (22a) coupled with the deck (12) for swivelling movement about an orientation axis (OA), the first swivelable rotatable member (22a) being having a first support member (36a) located adjacent thereto, the first support member (36a) being moveable along a first path lying parallel to the orientation axis (OA), the method comprising the characterising steps of:
(a) orientating the first swivelable rotatable (22a) member relative to the deck (12) about its orientation axis (OA) as and
(b) moving the first support member (36a) along the said first path to activate a lock to lock the first swivelable rotatable member (22a) in the desired orientation about its orientation axis (OA).

19. A method according to Claim 18 wherein orientating the first swivelable rotatable member (22a) includes aligning the first swivelable rotatable member (22a) relative to a first fixed rotatable member (24a).

20. A method according to Claim 19 wherein aligning the first swivelable rotatable member (22a) relative to the first fixed rotatable member (24a) includes arranging the first swivelable rotatable member (22a) so that it lies parallel with the first fixed rotatable member (24a).

21. A method according to Claim 20 wherein arranging the swivelable rotatable member (22a) so that it lies parallel with the first fixed rotatable member (24a) includes one of:
(c) moving the dolly-pallet (10) on a support surface in the direction of rotation of the first fixed rotatable member (24a), and
(d) orientating the dolly-pallet (10) such that the first swivelable rotatable member (22a) lies substantially above or below the first fixed rotatable member (24a).

## Patentansprüche

1. Eine Rollwagenpalette (10), umfassend ein Deck (12), das eine Vielzahl von damit gekoppelten Drehelementen (14) umfasst, wobei die Drehelemente (14) ein erstes schwenkbares Drehelement (22a) umfassen, das mit dem Deck (12) zum Schwenkbewegen um eine Ausrichtungsachse (OA) gekoppelt ist, wobei das erste schwenkbare Drehelement (22a) ein erstes Tragbauteil (36a) aufweist, das benachbart dazu angeordnet ist, wobei das erste Tragbauteil (36a) entlang eines ersten Pfads beweglich ist, der parallel zu der Ausrichtungsachse (OA) liegt, wobei die Rollwagenpalette (10) **dadurch gekennzeichnet ist, dass** ein Bewegen des ersten Tragbauteils (36a) entlang des ersten Pfads eine Arretierung aktiviert, um das erste schwenkbare Drehelement (22a) in einer gewünschten Ausrichtung um dessen Ausrichtungsachse (OA) zu arretieren.

2. Eine Rollwagenpalette (10) nach Anspruch 1, wobei das erste Tragbauteil (36a) zwischen ersten und zweiten Positionen entlang des ersten Pfads beweglich ist, wobei das erste Tragbauteil (36a) in der ersten Position näher zum Deck (12) angeordnet ist.

3. Eine Rollwagenpalette (10) nach Anspruch 2, wobei ein Bewegen des ersten Tragbauteils (36a) von der ersten Position zu der zweiten Position die Arretierung aktiviert.

4. Eine Rollwagenpalette (10) nach einem der vorangehenden Ansprüche, wobei die Vielzahl der Drehelemente (14) ein erstes Paar (16) von Drehelementen (14) umfasst, die benachbart zu einer Seite (18) des Decks (12) angeordnet sind, die in Gebrauch eine Frontseite (20) der Rollwagenpalette (10) definiert, wobei das erste Paar (16) der Drehelemente (14) das erste schwenkbare Drehelement (22a) und ein erstes festes Drehelement (24a) umfasst, das eine feste Ausrichtung relativ zu dem Deck (12) aufweist, wobei das erste feste Drehelement (24a) ein zweites Tragbauteil (36b) aufweist, das benachbart dazu angeordnet ist, wobei das zweite Tragbauteil (36b) zusammen mit dem ersten Tragbauteil (36a) beweglich ist.

5. Eine Rollwagenpalette (10) nach Anspruch 4, wobei die gewünschte Ausrichtung des ersten schwenkbaren Drehelements (22a) derart ist, dass die Differenz der Nähe eines Teils des ersten schwenkbaren Drehelements (22a), das über das erste Tragbauteil (36a) hinaus exponiert ist, und der Nähe eines Teils des ersten festen Drehelements (24a), das über das zweite Tragbauteil (36b) hinaus exponiert ist, in Gebrauch zu der Frontseite (20) der Rollwagenpalette (10) nicht größer als ein vorbestimmter Grenzwert ist.

6. Eine Rollwagenpalette (10) nach Anspruch 5, wobei der vorbestimmte Grenzwert folgendes ist:
(i) ein gewünschter Prozentanteil des Abstandes zwischen dem ersten schwenkbaren (22a) und dem ersten festen (24a) Drehelement; oder
(ii) ein gewünschter Prozentanteil des Durchmessers des ersten schwenkbaren (22a) oder des ersten festen (24a) Drehelements.

7. Eine Rollwagenpalette (10) nach Anspruch 5 oder Anspruch 6, wobei der vorbestimmte Grenzwert in dem Bereich von 0 bis 50 mm liegt.

8. Eine Rollwagenpalette (10) nach Anspruch 7, wobei der vorbestimmte Grenzwert in dem Bereich von 0 bis 20 mm liegt.

9. Eine Rollwagenpalette (10) nach Anspruch 8, wobei der vorbestimmte Grenzwert im Wesentlichen Null ist.

10. Eine Rollwagenpalette (10) nach einem der Ansprüche 4 bis 9, wobei das erste schwenkbare Drehelement (22a) von dessen Ausrichtungsachse (OA) versetzt ist, und wobei der vorbestimmte Grenzwert gleich der größten Differenz der Nähe des exponierten Teils (48) des ersten festen Drehelements (24a) in Gebrauch zu der Frontseite (20) der Rollwagenpalette (10) und der Nähe des exponierten Teils (48) des ersten schwenkbaren Drehelements (22a) zu der Frontseite (20) der Rollwagenpalette (10) ist, wobei das erste schwenkbare Drehelement (22a) der Frontseite (20) der Rollwagenpalette (10) nachläuft.

11. Eine Rollwagenpalette (10) nach einem der Ansprüche 4 bis 10, wobei das erste feste Drehelement (24a) in Gebrauch im Wesentlichen parallel zu der Frontseite (20) der Rollwagenpalette (10) liegt.

12. Eine Rollwagenpalette (10) nach Anspruch 11, wobei die gewünschte Ausrichtung des ersten schwenkbaren Drehelements (22a) parallel zu dem ersten festen Drehelement (24a) liegt.

13. Eine Rollwagenpalette (10) nach einem der Ansprüche 4 bis 12, umfassend erste (16) und zweite (26) Paare von Drehelementen (14), wobei das zweite Paar (26) benachbart zu einer zweiten Seite (28) des Decks (12) liegt, die in Gebrauch eine Heckseite (30) der Rollwagenpalette (10) definiert, und ein zweites schwenkbares Drehelement (22b) und ein zweites festes Drehelement (24b) umfasst, wobei das zweite schenkbare Drehelement (22b) benachbart zu dem ersten Tragebauteil (36a) angeordnet ist, und wobei das zweite feste Drehelement (24b) benachbart zu dem zweiten Tragebauteil (36b) angeordnet ist, und wobei die zweiten schwenkbaren (22b) und festen (24b) Drehelemente relativ zueinander auf die gleiche Art und Weise wie die ersten schwenkbaren (22a) und festen (24a) Drehelemente konfigurierbar sind.

14. Eine Rollwagenpalette (10) nach einem der vorangehenden Ansprüche, wobei die Arretierung ein Arretierungsbauteil (32) umfasst, das zumindest dem ersten schwenkbaren Drehelement (22a) zugeordnet ist, wobei das oder jedes Arretierungsbauteil (32) selektiv mit dem zugeordneten schwenkbaren Drehelement (22a, 22b) interagieren kann, um die Ausrichtung des schwenkbaren Drehelements (22a, 22b) um dessen Ausrichtungsachse (OA) zu arretieren.

15. Eine Rollwagenpalette (10) nach Anspruch 14, wobei das oder jedes Arretierungsbauteil (32) ferner mit dem zugeordneten schwenkbaren Drehelement (22a, 22b) interagieren kann, um eine Rotation des schwenkbaren Drehelements (22a, 22b) zu unterbinden.

16. Eine Rollwagenpalette (10) nach einem der von Anspruch 2 abhängigen vorangehenden Ansprüche, wobei das zumindest eine Tragebauteil (36a, 36b) ein Bremsbauteil (40) umfasst, das mit zumindest einem Rollelement (42) eines Fördermittels (44) interagieren kann, während sich das zugeordnete Tragebauteil (36a, 36b) in der zweiten Position befindet, um eine laterale Bewegung der Rollwagenpalette (10) relativ zu dem oder jedem Rollelement (42) zu unterbinden.

17. Eine Rollwagenpalette (10) nach Anspruch 16, wobei das oder jedes Bremsbauteil (40) ein Vorspannelement zum Wegdrängen des Bremsbauteils (40) von dem zugeordneten Tragebauteil (36a, 36b) umfasst.

18. Ein Verfahren zum Konfigurieren einer Rollwagenpalette (10) für den Gebrauch, wobei die Rollwagenpalette (10) ein Deck (12) umfasst, das eine Vielzahl von damit gekoppelten Drehelementen (14) umfasst, wobei die Drehelemente (14) ein erstes schwenkbares Drehelement (22a) umfassen, das mit dem Deck (12) zum Schwenkbewegen um eine Ausrichtungsachse (OA) gekoppelt ist, wobei das erste schwenkbare Drehelement (22a) ein erstes Tragbauteil (36a) aufweist, das benachbart dazu angeordnet ist, wobei das erste Tragbauteil (36a) entlang eines ersten Pfads beweglich ist, der parallel zu der Ausrichtungsachse (OA) liegt, wobei das Verfahren die folgenden kennzeichnenden Schritte umfasst:
(a) Ausrichten des ersten schwenkbaren Drehelements (22a) relativ zu dem Deck (12) um dessen Ausrichtungsachse (OA) wie gewünscht; und
(b) Bewegen des ersten Tragebauteils (36a) entlang des ersten Pfads zum Aktivieren einer Arretierung, um das erste schwenkbare Drehelement (22a) in der gewünschten Ausrichtung um dessen Ausrichtungsachse (OA) zu arretieren.

19. Ein Verfahren nach Anspruch 18, wobei das Ausrichten des ersten schwenkbaren Drehelements (22a) ein Justieren des ersten schwenkbaren Drehelements (22a) relativ zu dem ersten festen Drehelement (24a) umfasst.

20. Ein Verfahren nach Anspruch 19, wobei das Justieren des ersten schwenkbaren Drehelements (22a) relativ zu dem ersten Drehelement (24a) ein Anordnen des ersten schwenkbaren Drehelements (22a) umfasst, so dass dieses parallel zu dem ersten festen Drehelement (24a) liegt.

21. Ein Verfahren nach Anspruch 20, wobei das Anordnen des ersten schwenkbaren Drehelements (22a), so dass diese parallel zu dem ersten festen Drehelement (24a) liegt, einen der folgenden Schritte umfasst:
(c) Bewegen der Rollwagenpalette (10) auf einer Lagerfläche in der Richtung der Rotation des ersten festen Drehelements (24a); und
(d) Ausrichten der Rollwagenpalette (10) derart, dass das erste schwenkbare Drehelement (22a) im Wesentlichen oberhalb oder unterhalb des ersten festen Drehelements (24a) liegt.

## Revendications

1. Palette roulante (10) comprenant un plancher (12) comportant une pluralité d'organes rotatifs (14), couplés à celui-ci, les organes rotatifs (14) comportant un premier organe rotatif pivotable (22a) couplé au plancher (12) pour un mouvement de pivotement autour d'un axe d'orientation (OA), le premier organe rotatif pivotable (22a) comportant un premier organe de support (36a) adjacent à lui, le premier organe de support (36a) étant mobile le long d'un premier trajet parallèle à l'axe d'orientation (OA), la palette roulante (10) étant **caractérisée en ce qu'**un mouvement du premier organe de support (36a) le long dudit premier trajet active un verrou pour verrouiller le premier organe rotatif pivotable (22a) dans une orientation souhaitée autour de son axe d'orientation (OA).

2. Palette roulante (10) selon la revendication 1, dans laquelle le premier organe de support (36a) est mobile entre des première et seconde positions le long dudit premier trajet, le premier organe de support (36a) étant plus proche du plancher (12) dans la première position.

3. Palette roulante (10) selon la revendication 2, dans laquelle un mouvement du premier organe de support (36a) de la première position à la seconde position active le verrou.

4. Palette roulante (10) selon l'une quelconque des revendications précédentes, dans laquelle la pluralité d'organes rotatifs (14) comporte une première paire (16) d'organes rotatifs (14) adjacents à un côté (18) du plancher (12) définissant, en utilisation, un côté d'attaque (20) de la palette roulante (10), la première paire (16) d'organes rotatifs (14) comportant le premier organe rotatif pivotable (22a) et un premier organe rotatif fixe (24a) ayant une orientation fixe par rapport au plancher (12), le premier organe rotatif fixe (24a) comportant un second organe de support (36b) adjacent à lui, le second organe de support (36b) étant mobile conjointement avec le premier organe de support (36a).

5. Palette roulante (10) selon la revendication 4, dans laquelle l'orientation souhaitée du premier organe rotatif pivotable (22a) est telle que la différence de proximité d'une partie du premier organe rotatif pivotable (22a) exposée au-delà du premier organe de support (36a) et la proximité d'une partie du premier organe rotatif fixe (24a) exposée au-delà du second organe de support (36b), en utilisation, au côté d'attaque (20) de la palette roulante (10) est non supérieure à une limite prédéterminée.

6. Palette roulante (10) selon la revendication 5, dans laquelle la limite prédéterminée est :
(i) un pourcentage souhaité de l'espacement entre les premiers organes rotatifs pivotable (22a) et fixe (24a) ; ou
(ii) un pourcentage souhaité du diamètre de l'un du premier organe rotatif pivotable (22a) ou du premier organe rotatif fixe (24a).

7. Palette roulante (10) selon la revendication 5 ou la revendication 6, dans laquelle la limite prédéterminée se trouve dans la plage de 0 à 50 mm.

8. Palette roulante (10) selon la revendication 7, dans laquelle la limite prédéterminée se trouve dans la plage de 0 à 20 mm.

9. Palette roulante (10) selon la revendication 8, dans laquelle la limite prédéterminée est sensiblement de zéro.

10. Palette roulante (10) selon l'une quelconque des revendications 4 à 9, dans laquelle le premier organe rotatif pivotable (22a) est décalé de son axe d'orientation (OA) et la limite prédéterminée est égale à la plus grande différence de proximité de la partie exposée (48) du premier organe rotatif fixe (24a), en utilisation, au côté d'attaque (20) de la palette roulante (10) et la proximité de la partie exposée (46) du premier organe rotatif pivotable (22a) au côté d'attaque (20) de la palette roulante (10), tandis que le premier organe rotatif pivotable (22a) tire le côté d'attaque (20) de la palette roulante (10).

11. Palette roulante (10) selon l'une quelconque des revendications 4 à 10, dans laquelle le premier organe rotatif (24a) est sensiblement parallèle, en utilisation, au côté d'attaque (20) de la palette roulante (10).

12. Palette roulante (10) selon la revendication 11, dans laquelle l'orientation souhaitée du premier organe rotatif pivotable (22a) est parallèle au premier organe rotatif fixe (24a).

13. Palette roulante (10) selon l'une quelconque des revendications 4 à 12, comportant des première (16) et seconde (26) paires d'organes rotatifs (14), la seconde paire (26) étant adjacente à un second côté (28) du plancher (12) définissant, en utilisation, un côté de fuite (30) de la palette roulante (10) et comportant un second organe rotatif pivotable (22b) et un second organe rotatif fixe (24b), le second organe rotatif pivotable (22b) ayant le premier organe de support (36a) adjacent à lui et le second organe rotatif fixe (24b) ayant le second organe de support (36b) adjacent à lui, les seconds organes rotatifs pivotable (22b) et fixe (24b) étant configurables l'un par rapport à l'autre de la même manière que les premiers organes rotatifs pivotable (22a) et fixe (24a).

14. Palette roulante (10) selon l'une quelconque des revendications précédentes, dans laquelle le verrou comporte un organe de verrou (32) correspondant au moins au premier organe rotatif pivotable (22a), l'organe ou chaque organe de verrou (32) pouvant être sélectivement mis en prise avec l'organe rotatif pivotable (22a, 22b) correspondant pour verrouiller l'orientation de l'organe rotatif pivotable (22a, 22b) autour de son axe d'orientation (OA).

15. Palette roulante (10) selon la revendication 14, dans laquelle l'organe ou chaque organe de verrou (32) peut en outre être mis en prise avec l'organe rotatif pivotable (22a, 22b) correspondant pour inhiber une rotation de l'organe rotatif pivotable (22a, 22b).

16. Palette roulante (10) selon l'une quelconque des revendications précédentes lorsqu'elle dépend de la revendication 2, dans laquelle au moins un organe de support (36a, 36b) comporte un organe de frein (40) pouvant être mis en prise avec au moins un élément de rouleau (42) d'un convoyeur (44) pendant que l'organe de support (36a, 36b) correspondant est dans la seconde position pour inhiber un mouvement latéral de la palette roulante (10) par rapport à l'élément ou à chaque élément de rouleau (42).

17. Palette roulante (10) selon la revendication 16, dans laquelle l'organe ou chaque organe de frein (40) comporte un élément de sollicitation permettant d'éloigner l'organe de frein (40) de l'organe de support (36a, 36b) correspondant par poussée.

18. Procédé de configuration d'une palette roulante (10) pour l'utilisation, la palette roulante (10) comprenant un plancher (12) comportant une pluralité d'organes rotatifs (14), couplés à celui-ci, les organes rotatifs (14) comportant un premier organe rotatif pivotable (22a) couplé au plancher (12) pour un mouvement de pivotement autour d'un axe d'orientation (OA), le premier organe rotatif pivotable (22) ayant un premier organe de support (36a) adjacent à lui, le premier organe de support (36a) étant mobile le long d'un premier trajet parallèle à l'axe d'orientation (OA), le procédé comprenant les étapes caractéristiques consistant à :
a) orienter le premier organe de rotatif pivotable (22a) par rapport au plancher (12) autour de son axe d'orientation (OA) selon le souhait ; et
b) déplacer le premier organe de support (36a) le long du premier trajet pour activer un verrou permettant de verrouiller le premier organe rotatif pivotable (22a) dans l'orientation souhaitée autour de son axe d'orientation (OA).

19. Procédé selon la revendication 18, dans lequel l'orientation du premier organe rotatif pivotable (22a) comporte l'alignement du premier organe rotatif pivotable (22a) par rapport à un premier organe rotatif fixe (24a).

20. Procédé selon la revendication 19, dans lequel l'alignement du premier organe rotatif pivotable (22a) par rapport au premier organe rotatif fixe (24a) comporte l'agencement du premier organe rotatif pivotable (22a) de sorte qu'il soit parallèle au premier organe rotatif fixe (24a).

21. Procédé selon la revendication 20, dans lequel l'agencement du premier organe rotatif pivotable (22a) de sorte qu'il soit parallèle au le premier organe rotatif fixe (24a) comporte l'une des étapes consistant à :
c) déplacer la palette roulante (10) sur une surface de support dans la direction de rotation du premier organe rotatif fixe (24a) ; et
d) orienter la palette roulante (10) de telle sorte que le premier organe rotatif pivotable (22a) se trouve sensiblement au-dessus ou au-dessous du premier organe rotatif fixe (24a).
